# EUROPEAN PATENT APPLICATION

(11) **EP 2 444 643 A2**
(43) Date of publication of application: **25.04.2012**
(21) Application number: 11185964.1
(22) Date of filing: 20.10.2011
(51) Int. Cl.: F02D 41/30, F02D 41/40

(54) **Cylinder injection engine and control device therefor**

(30) Priority: 21.10.2010 JP 2010236060
(71) Applicant: Hitachi Ltd., Tokyo 100-8280 (JP)
(72) Inventor: Kihara, Yusuke, Tokyo, 100-8220 (JP); Sukegawa, Yoshihiro, Tokyo, 100-8220 (JP); Kumano, Kengo, Tokyo, 100-8220 (JP); Okamoto, Takashi, Ibaraki, 312-8503 (JP)
(74) Representative: MERH-IP Matias Erny Reichl Hoffmann

(57) **Abstract**

In a cylinder injection engine and a control device for the engine, for achieving both of the decrease of a particulate matter by suppression of fuel adhesion on the piston during fast idling of cold start and ignition retard fuel by stratification of a mixed gas around an ignition plug, a closing timing of a suction valve is set to a middle stage of a compression stroke in which a piston moving speed becomes maximum, while the fuel adhesion to the piston is decreased by injecting the fuel for stratification onto the ignition plug in the vicinity of a piston bottom dead center, and when the piston is raised in the compression stroke, the mixed gas flows from a combustion chamber to a suction pipe to generate a rising flow, and by this rising flow, the mixed gas is stratified around the ignition plug.

## Description

### Background of the Invention

### (1) Field of the Invention

The present invention relates to a cylinder injection engine and a control device for the engine.

### (2) Description of Related Art

In a state where a catalyst is inactive at cold start, a harmful substance in an exhaust gas is discharged as it is to the atmosphere, and thus there is known a technology for injecting a fuel in a compression stroke to stratify a mixed gas around an ignition plug for a purpose of early activation of the catalyst, which is disclosed in, for example, JP-A-2008-151020 and JP-A-2008-175187.

For early activating the catalyst, an ignition retard control technique is used in which an ignition timing is retarded from a top dead point to raise a temperature of the exhaust gas, and for stably combusting when the ignition is retarded, it is necessary to form the layer of the mixed gas around the ignition plug. For the stratification of the mixed gas around the ignition plug, the fuel is injected in a later stage of the compression stroke, to collect the mixed gas around the ignition plug by a configuration of a piston or a penetration force of the spray of the fuel. However, a distance from a tip of a fuel injection valve to the piston is short, and a large amount of the fuel is adhered on the surface of the piston. In this case, there is a problem that diffusion combustion occurs at a place where a fuel liquid film is formed to noticeably increases a discharged amount of a particulate matter (PM).

For decreasing this fuel adhesion to the piston, it is necessary to inject the fuel early in the compression stroke. The larger the distance from the tip of an injector to the piston becomes, the more the fuel adhesion to the piston decreases. However, when the injected fuel reaches the piston and forms the mixed gas, a distance from this mixed gas to the ignition plug becomes large, whereby it becomes difficult to stratify the mixed gas around the ignition plug. In particular, when the injected fuel reaches the surface of the piston, the penetration force of the spray decreases, which requires means for transporting the mixed gas to the ignition plug to stratify the mixed gas of the piston surface around the ignition plug.

### Brief Summary of the Invention

An object of the present invention is to achieve both of the decrease of a fuel adhered on a piston during fast idling of cold start and the stratification of a mixed gas onto an ignition plug.

For achieving the object, according to a first aspect of the invention, there is provided a cylinder injection engine characterized in that, first, for the decrease of fuel adhesion on the piston, a fuel injection timing is set to be a timing between a middle stage of a suction stroke and the vicinity of a piston bottom dead center. Then, for transporting the mixed gas at the surface of the piston to the ignition plug, a mechanism which can vary an opening/closing timing of a suction valve is provided to set the closing timing of the suction valve to a middle stage of a compression stroke in which a piston moving speed becomes maximum, so as to generate a rising flow by flowing the mixed gas from combustion chamber to a suction pipe according to the piston rising in the compression stroke, and means is further provided in which the raised mixed gas is stratified around the ignition plug.

In the present invention, a spray specification may be determined so that an intersection point between a fuel spray centroidal line and a piston surface at the piston bottom dead center is on an exhaust side closer than a center line of the ignition plug. In consequence, the fuel injected in the vicinity of the piston bottom dead center forms the mixed gas on the exhaust side of the piston surface, and hence it becomes easy to stratify the mixed gas raised by the rising flow onto the ignition plug.

In the present invention, a shape of the piston may be determined by providing a depression on an exhaust side of a piston surface so that a suction-side edge of the depression is disposed under the ignition plug. A flowing air and the mixed gas rise from the edge of the depression so as to suppress cycle fluctuations, which enables more stable combustion when ignition is retarded.

In the present invention, the number of times of the fuel injection may be divided into a plurality of times, and a first fuel injection timing may be set to a timing after the suction valve opens. If all the fuel is stratified around the ignition plug, it is feared that the fuel excessively concentrates, to generate a PM. Therefore, when the fuel is divided and injected at the plurality of times, the fuel which is stratified around the ignition plug can be decreased, and the PM generation can be suppressed.

In the present invention, the operation of the above first aspect may be performed in a state where a catalyst is inactive.

While the fuel is injected in the vicinity of the piston bottom dead center to minimize the fuel adhered on the piston, the closing timing of the suction valve is delayed to generate the rising flow. By this rising flow, the mixed gas is transported to the ignition plug, whereby it is possible to maintain the mixed gas around the plug even when the ignition is retarded. Thus, it is possible to achieve both of the decrease of the fuel adhesion to the piston and the early activation of the catalyst.

Other objects, features and advantages of the invention will become apparent from the following description of the embodiments of the invention taken in conjunction with the accompanying drawings.

### Brief Description of the Several Views of the Drawing

Fig. 1 shows a condition in a combustion chamber at 173 degATDC in Embodiment 1 according to the present invention;
Fig. 2 shows a condition in the combustion chamber at a piston bottom dead center in Embodiment 1;
Fig. 3 shows a condition in the combustion chamber at 210 degATDC in Embodiment 1;
Fig. 4 shows a condition in the combustion chamber at 280 degATDC in Embodiment 1;
Fig. 5 shows a condition in the combustion chamber at 330 degATDC in Embodiment 1;
Fig. 6 shows a condition in a combustion chamber at 173 degATDC in Embodiment 2 according to the present invention;
Fig. 7 shows a condition in the combustion chamber at a piston bottom dead center in Embodiment 2;
Fig. 8 shows a condition in the combustion chamber at 210 degATDC in Embodiment 2;
Fig. 9 shows a condition in the combustion chamber at 280 degATDC in Embodiment 2;
Fig. 10 shows a condition in the combustion chamber at 330 degATDC in Embodiment 2;
Fig. 11 shows a condition in a combustion chamber at 86 degATDC in Embodiment 3 according to the present invention;
Fig. 12 shows a condition in the combustion chamber at 90 degATDC in Embodiment 3;
Fig. 13 shows a condition in the combustion chamber at 166 degATDC in Embodiment 3;
Fig. 14 shows a condition in the combustion chamber at 210 degATDC in Embodiment 3;
Fig. 15 shows a condition in the combustion chamber at 280 degATDC in Embodiment 3;
Fig. 16 shows a condition in the combustion chamber at 330 degATDC in Embodiment 3;
Fig. 17 shows a constitution of a cylinder injection engine in Embodiments 1 to 3;
Fig. 18 shows a spray configuration in a case where a fuel injection valve is seen from the side;
Fig. 19 shows a sectional spray configuration in a section taken along the XIX-XIX line of Fig. 18;
Fig. 20 shows a relation between an opening period of a suction valve and a fuel injection timing in Embodiments 1 and 2;
Fig. 21 shows a positional relation among the spray of a fuel, a piston and an ignition plug; and
Fig. 22 shows a relation between an opening period of a suction valve and a fuel injection timing in Embodiment 3.

### Detailed Description of the Invention

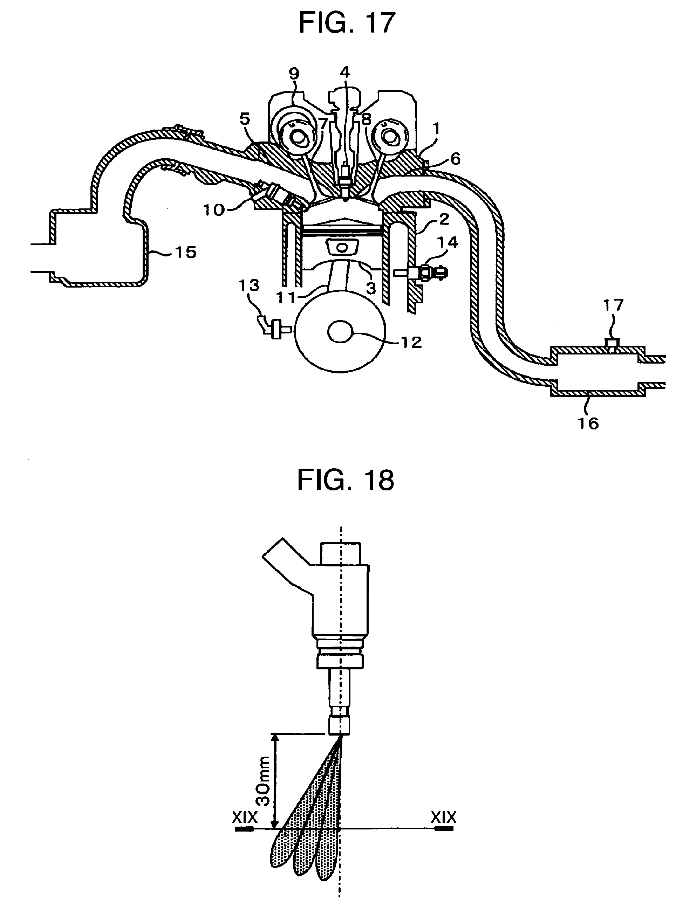

A constitution of a cylinder injection engine in first to third embodiments is shown in Fig. 17.

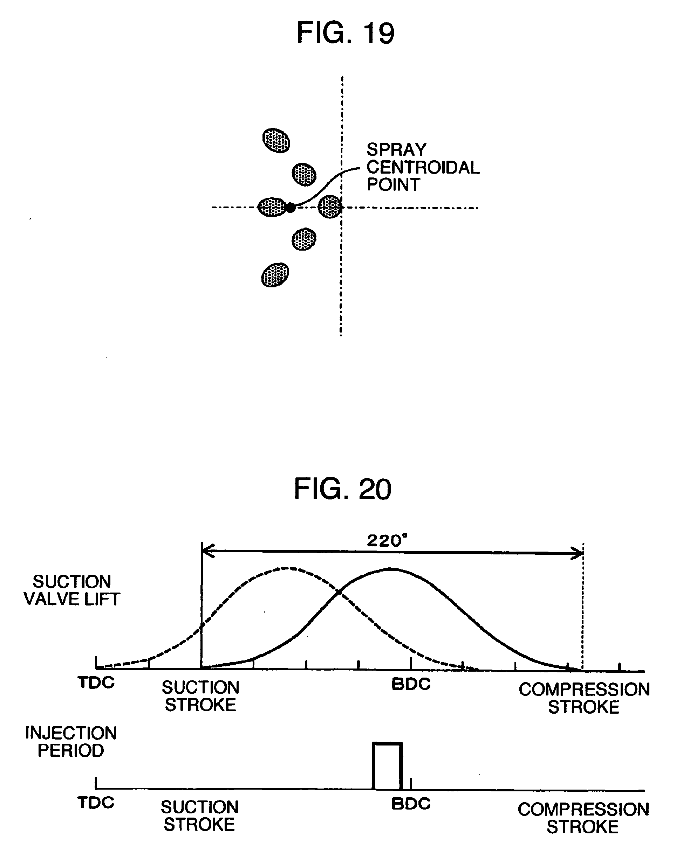

A combustion chamber is formed by a cylinder head 1, a cylinder block 2, and a piston 3 inserted into the cylinder block, and an ignition plug 4 is provided in an upper portion of the center of the combustion chamber. In the combustion chamber, a suction pipe 5 and an exhaust pipe 6 open, respectively, and a suction valve 7 and an exhaust valve 8 for opening and closing open portions of the pipes are provided. The exhaust valve and the suction valve have a usually used cam operation system, and the exhaust valve closes at a top dead point and the suction valve opens at the top dead point. An opening period of the suction valve is 220 deg. Moreover, there is provided a variable valve 9 which can vary a phase of the suction valve. As shown in Fig. 20, at a reference position, an opening timing is 0 degATDC and a closing timing is 220 degATDC. On the other hand, when the variable valve is operated, the opening timing can be 60 degATDC, and the closing timing can be 280 degATDC.

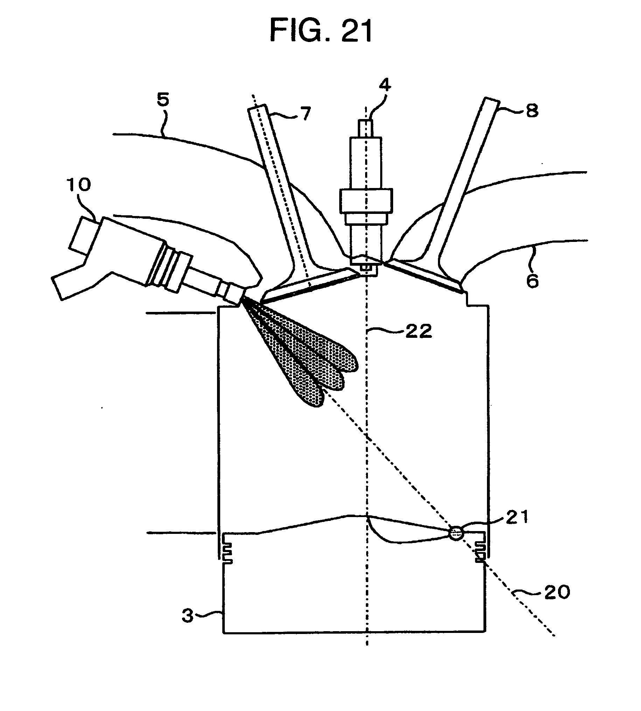

On a suction side of the combustion chamber, a fuel injection valve 10 is provided so that the valve can directly inject a fuel into the combustion chamber. The fuel injection valve is a multi-hole injector from which the fuel is injected through six injection holes, respectively, as shown in Fig. 18, and the sprayed fuel has a sectional configuration, as shown in Fig. 19, which is 30 mm under a tip of each injection hole. The present spray has the configuration which does not hit the suction valve, even when the fuel is injected on conditions that the suction valve is lifted to the maximum. The fuel injection valve is installed so that the ignition plug has a direction on the right side of the spray in Fig. 19. In a state where the fuel injection valve is attached to the engine, as shown in Fig. 21, an intersection point 21 between a spray centroidal line 20 and a piston bottom dead center is positioned on an exhaust side closer than an ignition plug center line 22. In a case where a fuel injection timing is in the vicinity of the piston bottom dead center, the injected fuel reaches the exhaust side of the piston.

A pressure of the fuel is raised by a high-pressure fuel pump (not shown) to inject the fuel. Returning to Fig. 17, the piston is connected to a crank shaft 12 via a connection rod 11, and an engine rotation number can be calculated by a crank angle sensor 13. To the cylinder block, a water temperature sensor 14 is attached, and a temperature of engine cooling water can be calculated. On an upstream side of the suction pipe is connected a collector 15, and an air flow sensor and a throttle valve are provided on an upstream side of the collector, although not shown. An amount of air to be sucked into the combustion chamber can be adjusted by opening and closing the throttle valve. In the drawings, only one cylinder is depicted, but the present embodiment is a 4-cylinder engine including each cylinder of 500 cc and having a compression ratio of 10, and the air is distributed to the respective cylinders through the collector. On a downstream side of the exhaust pipe are provided an air-fuel ratio sensor not shown and the like, in addition to a three way catalyst 16 and a catalyst temperature sensor 17. An engine control unit (not shown) is connected so that the unit can receive sensor signals and control a device, and in an ROM of an ECU, set values of various devices in accordance with the engine rotation number, water temperature, catalyst temperature and air-fuel ratio are recorded as map data.

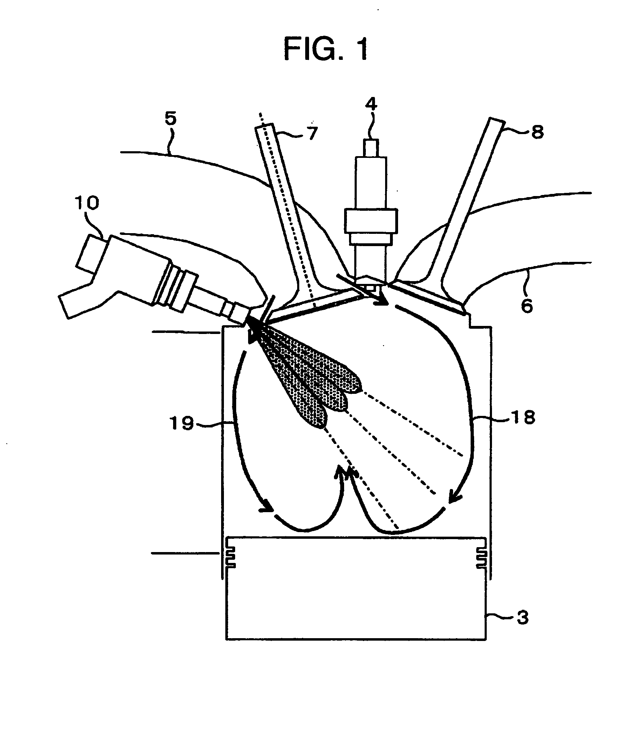

A first embodiment of the present invention will be described with reference to Fig. 1 to Fig. 5. In a case where after the start of an engine, an engine rotation number is 600 r/min or more and a catalyst temperature is lower than a temperature at which the catalyst becomes active, the start is judged as fast idling, to start ignition retard control. An ignition timing is set to 16 degATDC after a compression top dead point, and a variable valve operates to execute control so that a suction valve closing timing becomes 280 degATDC. A desired fuel amount is calculated so that an engine torque becomes a desirable value with respect to the ignition timing and the suction valve closing timing. A desired intake air amount is calculated so that an air-fuel ratio becomes 16 during the fast idling, and a throttle open degree is determined so that the intake air amount becomes a desired value, whereby a throttle valve is controlled. In the present embodiment, the engine rotation number is 1200 r/min, a shown average effective pressure is 1.8 bar, and a filling efficiency is 47%. From these conditions, the throttle open degree is determined, and the throttle valve is controlled.

Moreover, a pulse width corresponding to a fuel pressure is calculated in accordance with injection characteristics of a fuel injection valve. The present embodiment is a system in which a fuel is injected once in a cycle. A fuel pressure is 12 MPa, and an injection pulse width is 1.8 ms. A fuel injection timing is set to a range of 160 degATDC to 190 degATDC, while a piston bottom dead center is 180 degATDC. In the present embodiment, the fuel injection timing is set to 160 degATDC. In a suction stroke, a piston moves away from the spray of an injected fuel, and hence a broad injectable region can be obtained. A relation between an opening period of a suction valve and an injection timing is shown in Fig. 20.

An operation in the first embodiment will be described. Fig. 1 shows a condition in a combustion chamber at 173 degATDC immediately after the fuel is injected. In the suction stroke, the piston lowers so that the combustion chamber has a negative pressure therein. When the suction valve opens, air is sucked into the combustion chamber through an opening of the suction valve. The air flows into the combustion chamber through the whole periphery of the suction valve. A flowing air which flows into an exhaust side through the suction valve is an air flow 18, and a flowing air which flows into a suction side is an air flow 19. The air flow 18 collides with the air flow 19 near the center of the combustion chamber above the surface of the piston, and changes to a rising flow there. The injected fuel flows in an injection direction.

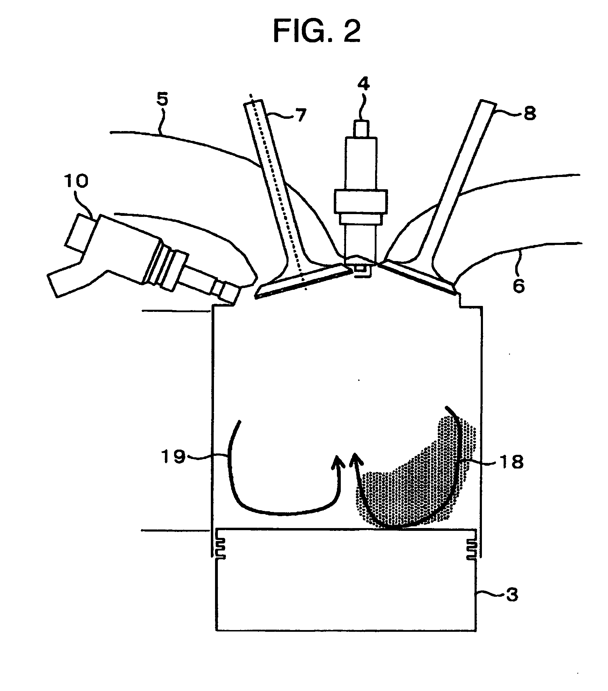

Fig. 2 shows a condition in the combustion chamber at the piston bottom dead center. The injected fuel reaches the piston surface on the exhaust side, and evaporates to form a mixed gas. A distance from a tip of the fuel injection valve to a piston surface is long, and hence the fuel adhered on the piston becomes minimum. In the vicinity of the piston bottom dead center, a piston speed becomes slow, and hence flow velocities of the air flows 18 and 19 lower.

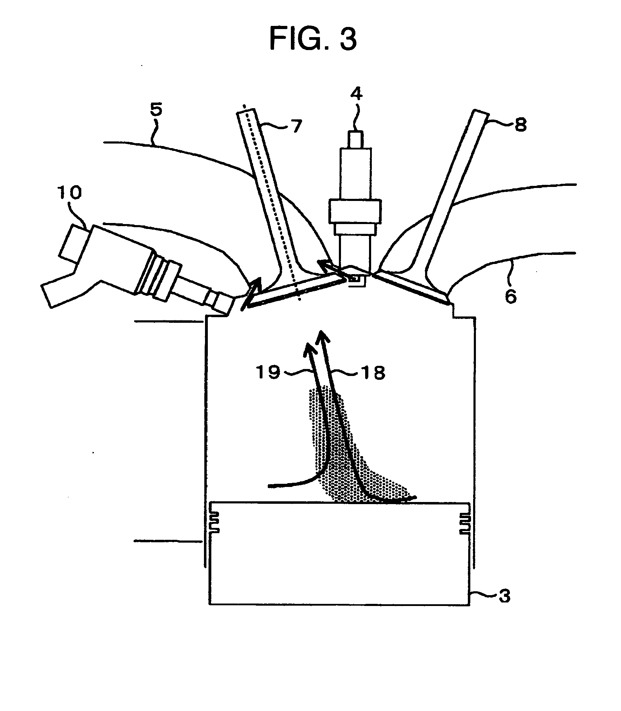

Fig. 3 shows a condition in the combustion chamber at 210 degATDC in an early stage of the compression stroke. When the piston rises, the air and the mixed gas are pushed upwards. Since the suction valve is open, the air flows from the combustion chamber to a suction pipe, and the flow velocities of the air flows 18 and 19 increase. The air flows 18 and 19 become a rising flow from the piston surface toward the suction pipe, and by this rising flow, the mixed gas is transported toward the suction valve.

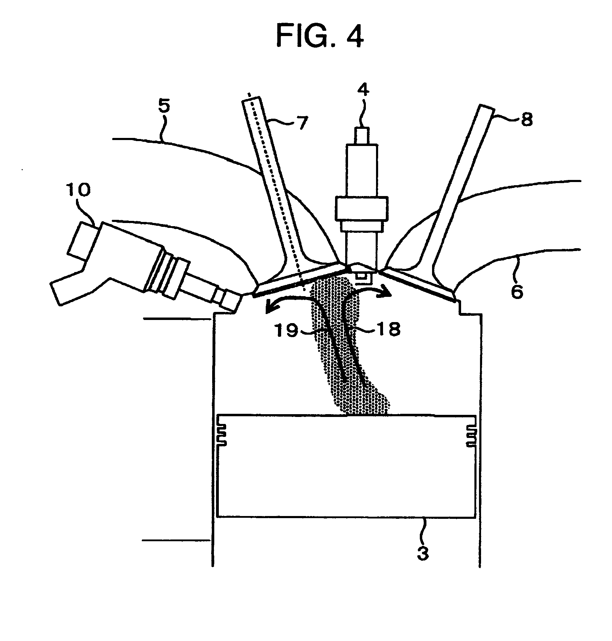

Fig. 4 shows a condition in the combustion chamber at 280 degATDC which is a suction valve closing timing. The mixed gas is transported to the suction valve by the air flows 18 and 19. However, the suction valve closes, and hence an outlet is eliminated. The air flow 18 becomes a flow from an ignition plug toward the exhaust side, and the air flow 19 becomes a flow from the ignition plug toward the suction side, whereby two swirls are generated in the combustion chamber.

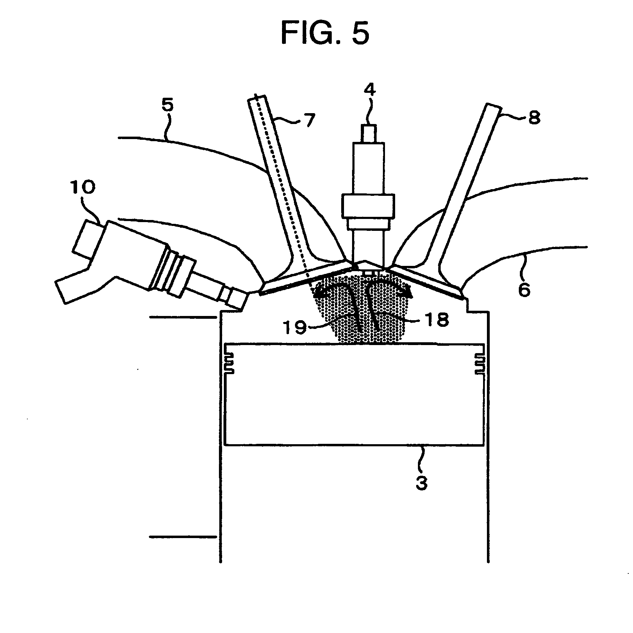

Fig. 5 shows a condition in the combustion chamber at 330 degATDC in a later stage of the compression stroke. The suction valve closes to eliminate a factor for generating the flowing air, and hence the air flows 18 and 19 decay, and the mixed gas is suspended around the ignition plug. When compression advances, the flowing air further decays, and the mixed gas is suspended around the ignition plug. Therefore, even when the ignition timing is delayed to 16 degATDC, the mixed gas is constantly present around the ignition plug, which enables ignition.

As described above, while the fuel is injected in the vicinity of the piston bottom dead center to minimize the fuel adhered on the piston, the suction valve closing timing is delayed to generate the rising flow. By this rising flow, the mixed gas is transported to the ignition plug, whereby it is possible to maintain the mixed gas around the plug even when the ignition is retarded. It is possible to achieve both of the decrease of the fuel adhesion to the piston and the early activation of the catalyst. Moreover, the mixed gas is disposed on the exhaust side at the piston bottom dead center, whereby when the mixed gas rises, the mixed gas easily reaches the ignition plug.

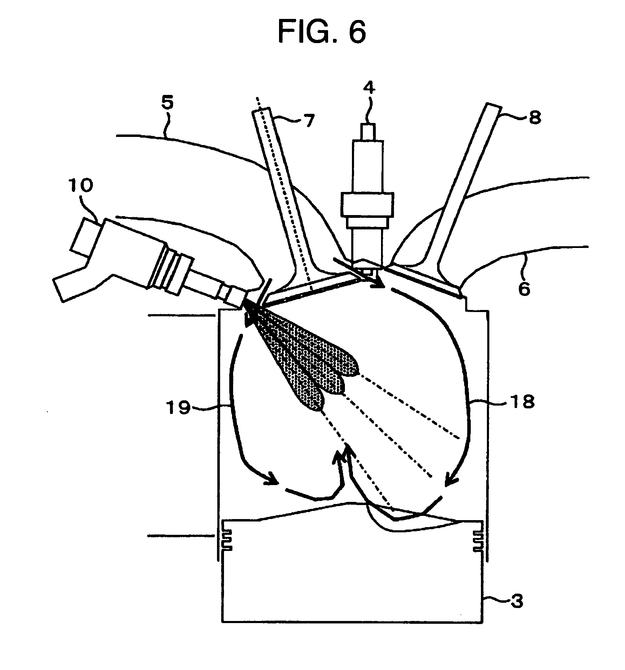

A second embodiment will be described with reference to Fig. 6 to Fig. 10. The embodiment is different from the first embodiment in that a depression is provided on an exhaust side of a piston surface. A suction-side edge of this depression has such a shape as to be positioned under an ignition plug.

In a flowing air, cycle fluctuations are generated, and a rising position of the air flow or a mixed gas changes every cycle. Therefore, it is feared that a concentration of the mixed gas around the ignition plug noticeably changes every cycle. In consequence, the depression is provided on the exhaust side to regulate the rising positions of the air flow and the mixed gas, thereby aiming at suppressing the cycle fluctuations. A constitution and conditions are the same as those of Embodiment 1, and hence the description thereof is omitted.

An operation in the second embodiment will be described. Fig. 6 shows a condition in a combustion chamber at 173 degATDC immediately after the fuel is injected. The condition is different from Fig. 1 of the first embodiment in that when an air flow 18 on the exhaust side reaches the piston, a direction of the air flow is changed to an upward direction at the edge of the depression.

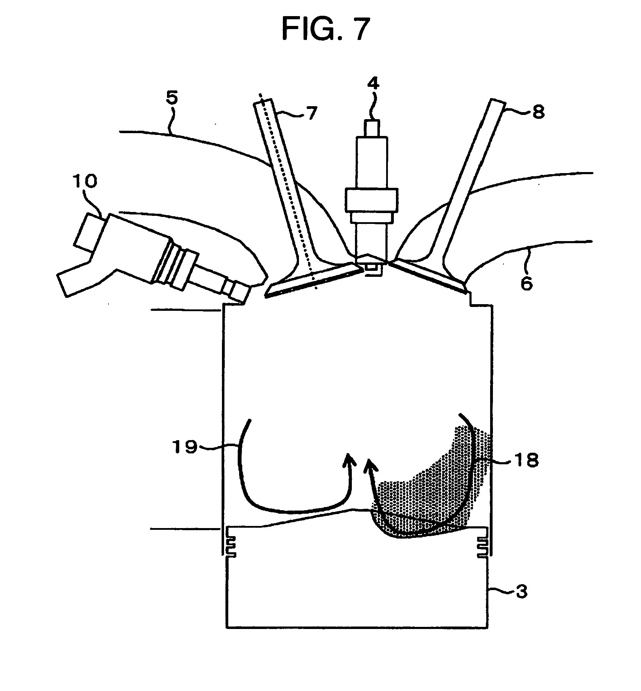

Fig. 7 shows a condition in the combustion chamber at a piston bottom dead center.

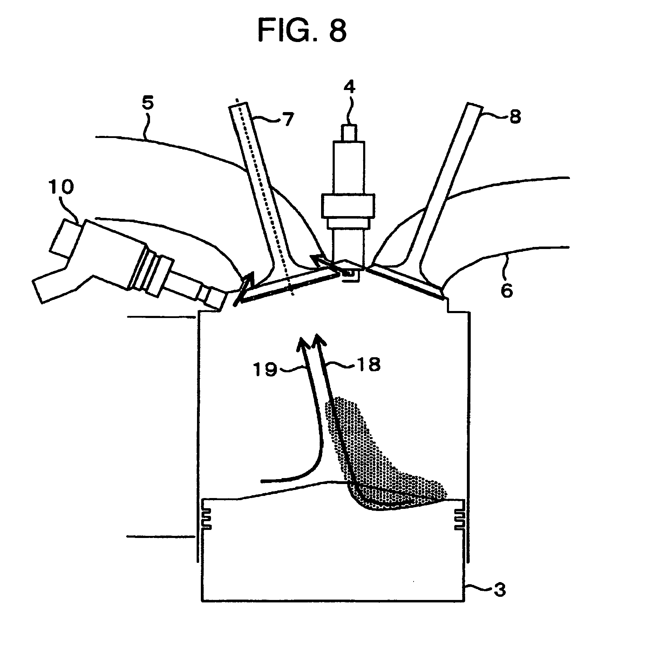

Fig. 8 shows a condition in the combustion chamber at 210 degATDC in an early stage of a compression stroke. At the edge of the depression, the air flow 18 rises, and the mixed gas also flows toward a suction valve by the rising flow.

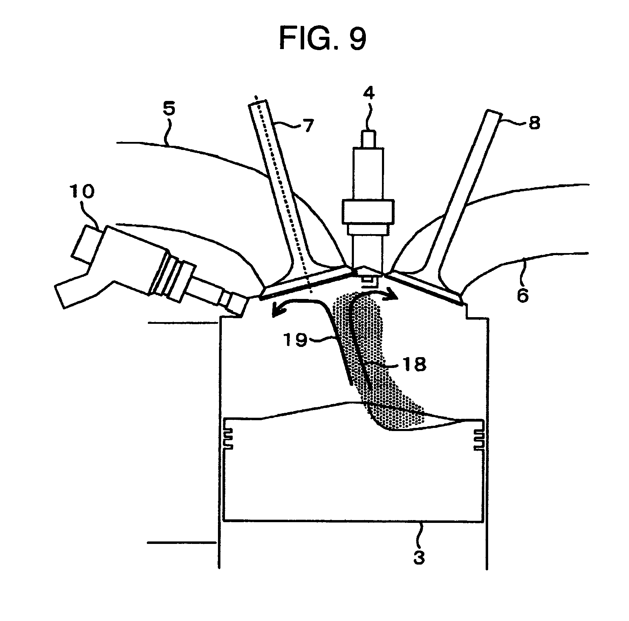

Fig. 9 shows a condition in the combustion chamber at 280 degATDC which is a suction valve closing timing.

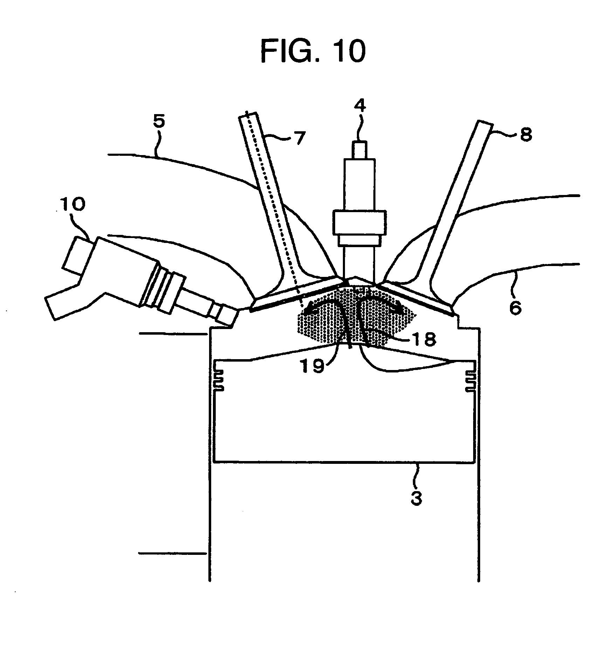

Fig. 10 shows a condition in the combustion chamber at 330 degATDC in a later stage of the compression stroke.

When the depression is provided in the piston surface as in the second embodiment, the rising positions of the air flow and the mixed gas can be regulated, and the cycle fluctuations can be suppressed. Moreover, when the suction-side edge of the depression is disposed under the ignition plug, the mixed gas can be transported to the ignition plug.

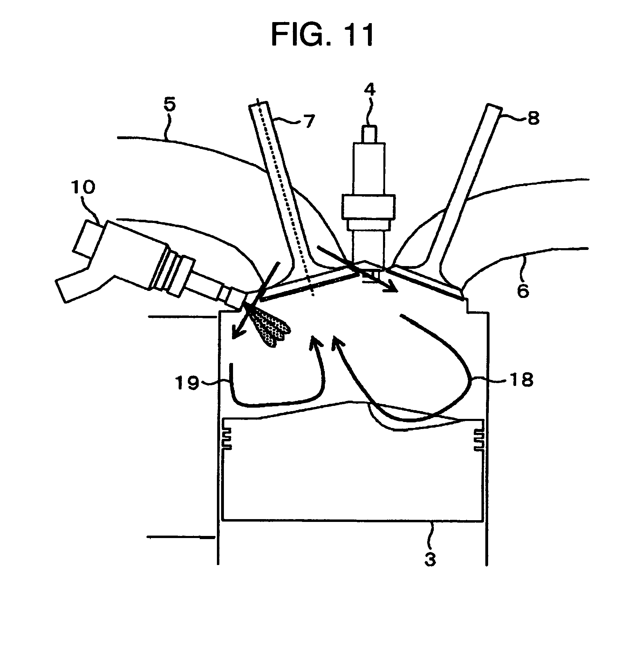

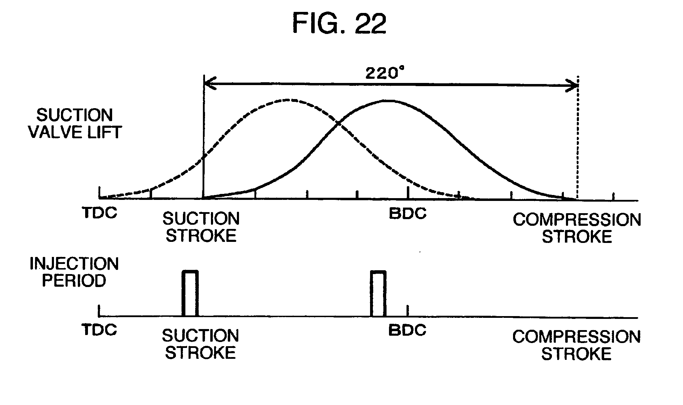

A third embodiment will be described with reference to Fig. 11 to Fig. 16. A constitution of the third embodiment is the same as that of the second embodiment, but the number of times of injection in a cycle is different. In the second embodiment, the fuel is injected once in the vicinity of the piston bottom dead center. However, when the fuel is injected once with an air-fuel ratio of 16 and all the fuel is stratified around the ignition plug, the mixed gas excessively concentrates, which might be a factor for increasing a PM. In this case, it is necessary to divide the fuel into two parts and inject the parts of the fuel twice and to set an amount of the fuel which stratifies around the ignition plug to be adequate. The third embodiment uses two injection times, i.e., 50% of the fuel is injected in the middle of a suction stroke and the remaining 50% is injected in the vicinity of the piston bottom dead center. A relation between an opening period of a suction valve and an injection timing is shown in Fig. 22.

A reason why the first fuel injection timing is earlier than the piston bottom dead center is that the first injected fuel forms a homogeneous mixed gas in the combustion chamber. A first fuel injection timing is 80 degATDC, and a second fuel injection timing is 160 degATDC. An operation of the suction valve is the same as that of Embodiment 2.

Fig. 11 shows a condition in the combustion chamber at 86 degATDC immediately after the first fuel injection at the piston bottom dead center.

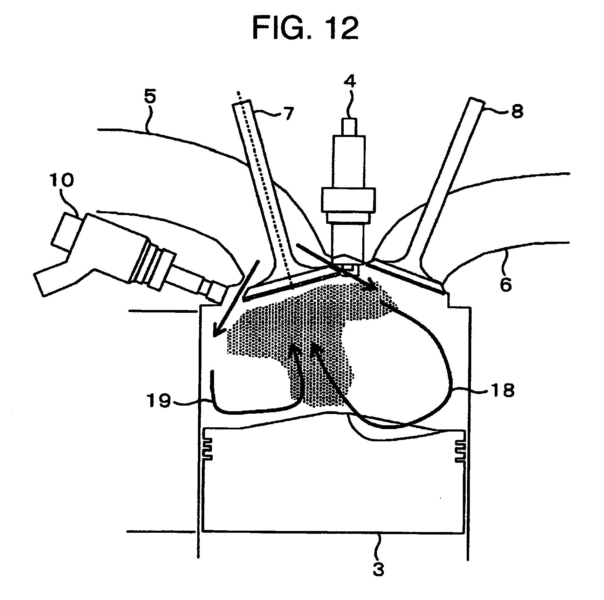

A suction valve opening timing is 60 degATDC, and a negative pressure in the combustion chamber becomes large between a piston top dead point and 60 degATDC. Therefore, immediately after a suction pipe opens at 60 degATDC, strong flowing air flowing into the combustion chamber through the suction pipe is generated. Therefore, air flows 18 and 19 having high flow velocities are generated in the combustion chamber immediately after the first fuel injection. The fuel evaporated at 90 degATDC shown in Fig. 12 is agitated in the combustion chamber, and spreads in the whole area of the combustion chamber.

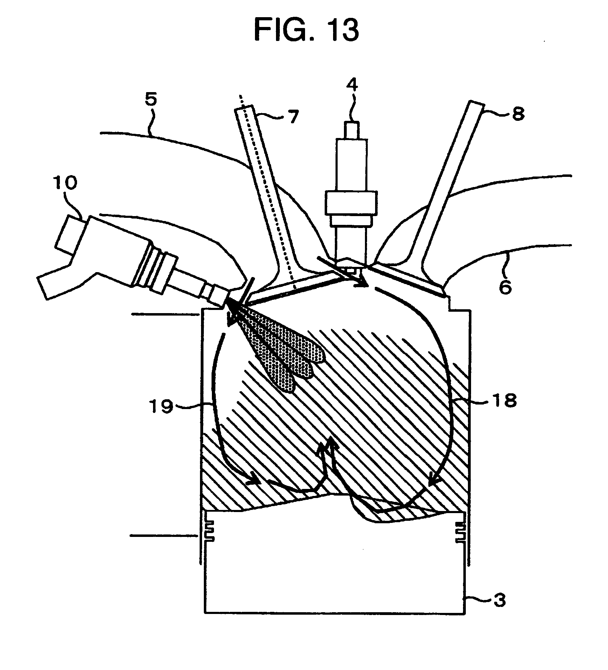

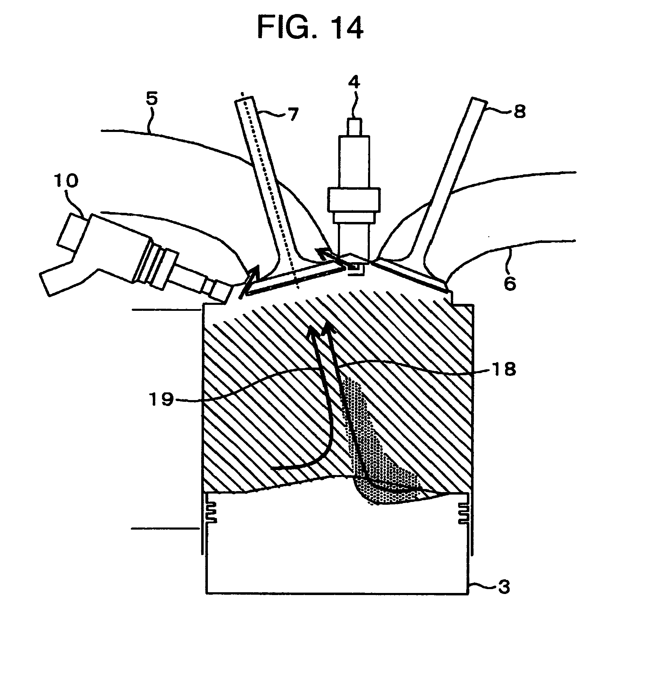

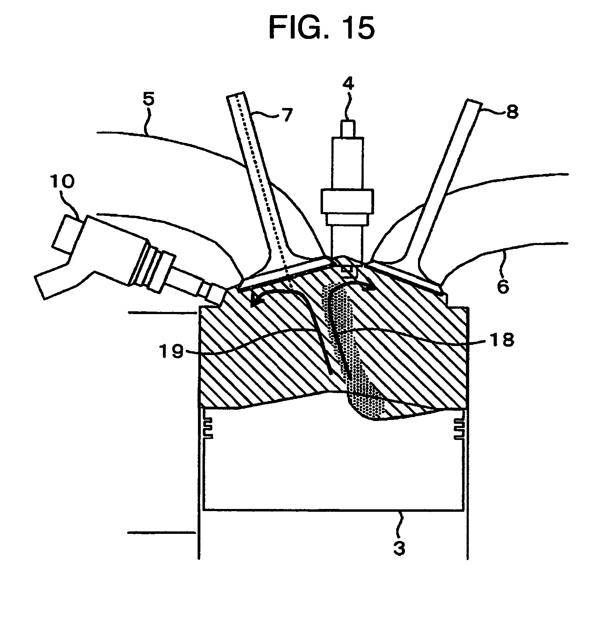

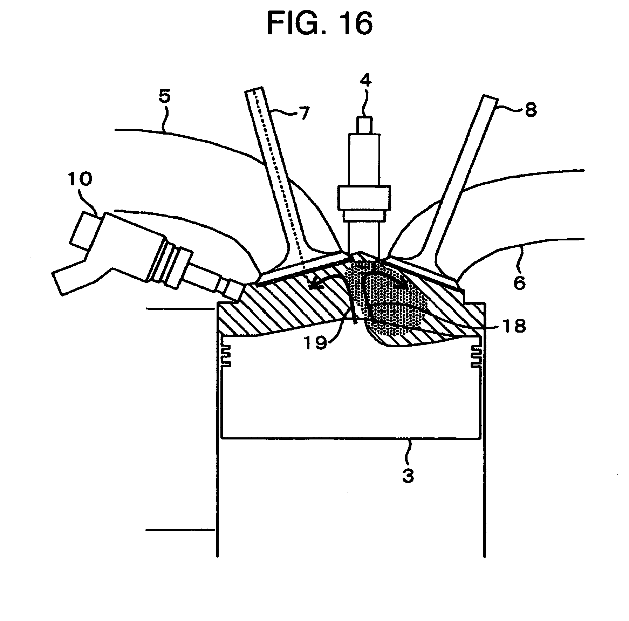

Fig. 13 shows a condition in the combustion chamber at 166 degATDC immediately after the second fuel injection, Fig. 14 shows a condition at 210 degATDC, Fig. 15 shows a condition at 280 degATDC, and Fig. 16 shows a condition at 330 degATDC, respectively. The first injected fuel is distributed in the combustion chamber, but the other constitution is similar to Embodiment 2, and hence the description thereof is omitted.

In the third embodiment, unlike the second embodiment, the number of times of injection is divided into two, whereby the excessive concentration of the mixed gas around the ignition plug can be suppressed. So, while the PM generated from the mixed gas having a high concentration is decreased, it is possible to achieve both of the decrease of the fuel adhesion to the piston and the early activation of a catalyst.

It should be further understood by those skilled in the art that the foregoing description has been mad on embodiments of the invention and that various changes and modifications may be made in the invention without departing from the spirit of the invention and the scope of the appended claims.

## Claims

1. A cylinder injection engine including a fuel injection valve at a position where a fuel is directly injectable into a combustion chamber, and a control device for the engine,
said cylinder injection engine comprising a variable valve mechanism which can change an opening/closing timing of a suction valve,
wherein a fuel injection timing is set to a timing between a middle stage of a suction stroke and a piston bottom dead center, and
the closing timing of the suction valve is set to a middle stage of a compression stroke.

2. The cylinder injection engine and the control device for the engine according to claim 1, wherein an intersection point between a centroidal line of a spray of the fuel injected through the fuel injection valve and a piston surface at the piston bottom dead center is positioned on an exhaust side closer than a center line of an ignition plug.

3. The cylinder injection engine and the control device for the engine according to claim 1, wherein a depression is provided on an exhaust side of a piston surface, and a suction-side edge of the depression is positioned under an ignition plug.

4. The cylinder injection engine and the control device for the engine according to claim 1, wherein the number of times of the fuel injection is divided into a plurality of times, and a first fuel injection timing is set to a timing after the suction valve opens.

5. A cylinder injection engine and a control device for the engine, wherein the operation of claim 1 is performed in a state where a catalyst is inactive.
